# EUROPEAN PATENT SPECIFICATION

(11) **EP 3 380 395 B1**
(45) Date of publication and mention of the grant of the patent: **26.08.2020**
(21) Application number: 16810447.9
(22) Date of filing: 25.11.2016
(51) Int. Cl.: B63B 27/24, B01D 5/00, F17C 6/00, B01D 53/00, C10G 5/06

(54) **METHOD OF USING VOC AS OIL TANK BLANKET GAS**
VERFAHREN ZUR VERWENDUNG VON VOC ALS SCHUTZGAS FÜR EINEN ÖLTANK
PROCÉDÉ D'UTILISATION D'UN COMPOSÉ ORGANIQUE VOLATIL EN TANT QUE GAZ DE COUVERTURE DE RÉSERVOIR D'HUILE

(30) Priority: 27.11.2015 GB 201520951
(43) Date of publication of application: 03.10.2018
(73) Proprietor: Babcock IP Management (Number One) Limited, London W1U 1QX (GB)
(72) Inventor: FELBAB, Nik, London W1U 1QX (GB)
(74) Representative: Murgitroyd & Company
(86) International application number: PCT/GB2016/053708
(87) International publication number: WO 2017/089816

(56) References cited:
- WO-A1-03/011420
- WO-A1-2004/081440
- US-A- 5 524 456

## Description

The present invention relates to improvements relating to oil storage tanks, in particular a method of providing blanket gas for use in one or more oil storage tanks and an apparatus for recovering and using volatile organic compounds (VOC) from one or more oil storage tanks.

When a crude oil storage tank (on land, on a ship, or an offshore installation) is loaded with crude oil, vapour in the tank is displaced from the tank. Depending on initial conditions in the tank (such as pressure, temperature, and vapour composition), additional vapour may also be generated. This combined displaced and generated vapour is removed from the crude oil tank in order to keep the tank pressure within design limits.

This vapour is typically a mixture of inert gas and volatile organic compounds (hereinafter 'VOC'), typically hydrocarbons, which pose an environmental problem if they are released into the atmosphere, and also represent a potential loss of product or cargo.

Currently, these displaced and generated vapours are either burned, to minimise hydrocarbon release, or partly recovered by pressurisation and condensation as 'liquefied VOC' (hereinafter 'LVOC'), or some combination thereof. LVOC is a mixture of the hydrocarbons from the displaced and generated vapour, typically propane and heavier. There will generally be a fraction of the vapour that cannot bet condensed at the pressures and temperatures used to create the LVOC.

After the LVOC has been recovered, it can be used elsewhere (for example as fuel), or alternatively, it can be re-vaporised and reused as blanket gas upon a subsequent discharge of crude oil from the tank. This has the advantage of keeping a higher hydrocarbon concentration in the tank vapour space, thereby reducing generation of additional VOCs from the next oil loading. But if only part of the vapour was recovered as LVOC, there will be insufficient LVOC to fill the whole crude oil tank volume. Additionally, some LVOC may still be absorbed into the crude oil.

Both these factors will also lead to a deficit of LVOC-sourced blanket gas, the remainder of which must be made up with inert gas. The more inert gas that is introduced, the lower the benefits of reusing LVOC as blanket gas.

Thus, there is a need in the art to improve oil storage tank conditions.

Document US 5524456 A discloses a method to recover and reuse volatile organic compounds and inert gases.

### Summary of the Invention

The present invention provides a method of providing blanket gas for use in one or more oil storage tanks comprising at least the steps of;
(a) recovering VOC from the one or more oil storage tanks as a recovered VOC stream;
(b) compressing the recovered VOC stream to provide a compressed recovered VOC stream;
(c) separating the compressed recovered VOC stream to provide at least a LVOC stream and an uncondensed VOC stream;
(d) compressing the uncondensed VOC stream to provide a compressed VOC stream;
(e) heating at least a portion of the compressed VOC stream to provide a warmer compressed VOC stream;
(f) reducing the pressure of the warmer compressed VOC stream to provide a decompressed VOC stream; and
(g) providing the decompressed VOC stream as blanket gas to one or more oil storage tanks.
(h) vapourising a portion of the liquefied volatile organic compounds (LVOC) stream to provide blanket gas for use in one or more oil storage tanks.

Optionally the method further comprises the step of recovering the VOC from the same one or more oil storage tanks subsequently provided with the decompressed VOC.

Optionally the method comprises compressing the recovered VOC stream to provide at least a LVOC stream and an uncondensed VOC stream at pressure above 5 bar, for example in the range 10-25 bar, and with cooling below 40 C, such as in the range 5-37 C, to provide a condensation or condensed liquid.

J Optionally, the recovery of VOC from the one or more oil storage tanks occurs when the oil storage tank is being loaded with oil, and the providing of the decompressed VOC stream as a blanket gas occurs when the oil storage tank is being emptied of the oil.

Optionally, the method further comprises the steps of heating at least a portion of the LVOC stream to provide a warmer LVOC stream, reducing the pressure of the warmer LVOC stream to provide a decompressed VOC stream, and providing the decompressed VOC stream as additional blanket gas to one or more oil storage tanks.

The present invention also provides apparatus for recovering and using VOC from one or more oil storage tanks comprising at least;
(a) one or more pipelines able to recover VOC from the one or more oil storage tanks as a recovered VOC stream;
(b) one or more first compressors able to compress the recovered VOC stream to provide a compressed recovered VOC stream;
(c) one or more separators able to separate the compressed recovered VOC stream to provide at least a LVOC stream and an uncondensed VOC stream;
(d) one or more second compressors able to compress the uncondensed VOC stream to provide a compressed VOC stream;
(e) one or more heaters able to heat at least a portion of the compressed VOC stream to provide a warmer compressed VOC stream;
(f) one or more reducers able to reduce the pressure of the warmer compressed VOC stream to provide a decompressed VOC stream; and
(g) one or more pipelines able to provide the decompressed VOC stream as blanket gas to one or more oil storage tanks.

The apparatus further comprises one or more storage tanks able to store the compressed VOC stream prior to step (e).

The apparatus further comprises one or more storage tanks able to store the LVOC stream.

The apparatus further comprises one or more one or more heaters able to heat at least a portion of the LVOC stream to provide a warmer LVOC stream, and one or more reducers able to reduce the pressure of the warmer LVOC to provide a decompressed VOC stream, and one or more pipelines able to provide the decompressed VOC stream as additional blanket gas to the one or more oil storage tanks.

Optionally, the apparatus further comprises one or more one or more pipelines able to provide a supply of inert gas as blanket gas to the one or more oil storage tanks.

Optionally, the apparatus is arranged on a sea vessel, on an oil platform, on a floating storage and offloading (FSO) unit, or on floating production storage and offloading (FPSO) unit.

### Description of the Drawing

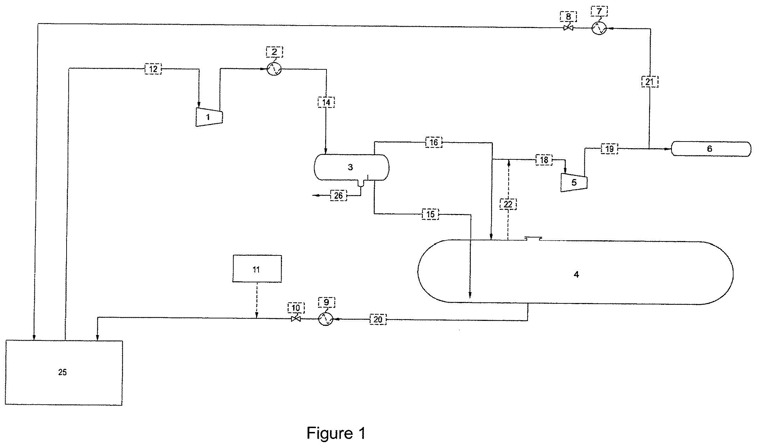

The invention can be better understood with reference to the following detailed description together with the appended illustrative drawing, Fig 1, which depicts a schematic diagram of an example of the process of this invention.

The present invention is useable with any suitable oil storage tank, which includes cargo tanks of vessels such as crude oil carriers, shuttle carriers, etc.; oil storage tanks on offshore installations such as oil platforms, floating storage and offloading (FSO) units, floating production storage and offloading (FPSO) units; or with land-based oil processing facilities.

Crude oil tankers can range from having only one oil tank, to having a multiple of oil storage tanks.

The term 'oil storage tank' as used herein may relate to more than oil storage tank, and the present invention is not limited to the number or nature of the or each oil tank, or its location.

The term volatile organic compounds or VOC is known in the art, and generally comprises at least two or more of the group comprising: methane, ethane, propane, isobutane, butane, isopentane, pentane, hexane, heptane, octane, and other hydrocarbons that are naturally released by a crude oil.

The term 'liquefied volatile organic compounds' or LVOC comprises those VOC which can be liquefied by pressurisation above 5 barg, for example in the range 10-25 barg, and cooling below 40°C, such as in the range 5-37°C, to provide a condensation or condensed liquid, which can be stored under the conditions of 10-25 barg at ambient temperature.

The term 'compressed volatile organic compound' or 'compressed VOC' comprises those VOC which are not LVOC, such as those VOCs which cannot be liquefied by the pressurisation and cooling steps carried out on VOC recovered from an oil storage tank to provide LVOC. For example, the compressed VOC may be those VOC which remain uncondensed by pressurisation above 5 barg and cooling below 40°C.

Referring to Figure 1, there is shown an oil storage tank 25. When the oil storage tank 25 (on land, on a ship, or an offshore installation) is loaded with crude oil, the vapour in the tank is displaced from the tank 25. Depending on initial conditions in the tank (such as pressure, temperature, and vapour composition), additional vapour may also be generated. This combined displaced and additional generated vapour is removed from the oil storage tank 25 in order to keep the storage tank pressure low.

This combined vapour is typically a mixture of inert gas and volatile organic compounds (hereinafter 'VOC'), optionally with some water vapour. Most VOC are created when the tank is loaded, because the loading displaces a large volume of gas, and in the absence of a hydrocarbon-rich blanket, generates even more.

The combined vapour is removed via a pipeline 12 in order to maintain low pressure in oil storage tank 25. The combined vapour is compressed by one or more gas compressors 1 to a pressure such as 25 barg.

The compressed vapour is then cooled in a heat exchanger 2, which can be provided with a coolant such as seawater, where LVOC is generated by condensation. Depending on the composition of the vapour in pipeline 12, some liquid water may also be generated.

However, depending up on the conditions of the pressurisation and cooling, there is commonly a portion of the VOC which remains uncondensed, and which therefore remains as an uncondensed vapour.

The LVOC, any water, and uncondensed vapour can all be passed via a pipeline 14 to a suitable separator, such as a three-phase separator 3. In the separator 3, water can be removed through a first outlet and sent elsewhere via pipeline 26. The LVOC is passed from another lower outlet of the separator 3 and via another pipeline 15 to a suitable LVOC storage tank 4.

The uncondensed vapour can be passed out of an upper outlet of the separator 3 and passed via a pipeline 18 to a compressor 5, in which it is compressed to a higher pressure (typically greater than 100barg or 200barg, such as 250 barg) to produce a compressed VOC stream.

Optionally, a portion of the uncondensed vapour can be passed out of the separator 3 and directly into the LVOC storage tank 4.

Also optionally, a portion of uncondensed vapour in the LVOC storage tank 4 can be sent to the compressor 5 from the LVOC storage tank 4 via a pipeline 22.

The compressed VOC stream can be sent via a pipeline 19 to a compressed VOC storage tank 6. The compressed VOC comprises the lighter components (typically predominantly nitrogen, methane, and ethane) that cannot be liquefied under the same conditions as LVOC.

Thus, during loading of the oil storage tank 25, LVOC and compressed VOC are being created. This generally ceases once the oil loading into the oil storage tank 25 is complete. This provides a supply of compressed VOC ready to use in the compressed VOC tank 6, and a supply of LVOC in the LVOC storage tank 4.

As a separate stage, typically some time later, the oil storage tank 25 undergoes a partial of complete unloading or emptying operation. At that time the compressed VOC, and optionally any required LVOC, can be used to supply the new blanket gas in the oil storage tank 25.

In one way, the present invention is a two-step process, the first step being generation of compressed VOC and LVOC during loading of an oil storage tank, and the second step being use of the compressed VOC as a source of blanket gas to be supplied to the oil storage tank during unloading of the oil storage tank. This process can be in association with the use of any LVOC also required as blanket gas.

When required for use as a source of blanket gas, the compressed VOC in the compressed VOC storage tank 6 can be provided via a pipeline 21 to a VOC heater 7, and to a pressure let-down system or reducer 8, in order to generate a lower-pressure stream that can be provided into the oil storage tank 25 as blanket gas, to assist or maintain positive pressure in the oil storage tank 25.

Alternatively, the compressed VOC stream in the pipeline 21 can first undergo pressure let-down or reduction, and then heating.

As the blanket gas provided from the compressed VOC stream comprises a high proportion of light hydrocarbon components, it will generally be less absorbed into oil subsequently loaded into the oil storage tank 25. This may partly depend upon the constituency of the oil that was in the relevant storage tank creating the VOC, and the constituency of the oil next being loaded into the relevant storage tank, but assumes any difference in the constituency to be of sufficiently small variance.

If any further blanket gas is required in the oil storage tank 25 after using the compressed VOC as the initial source of blanket gas, a supply of LVOC from the LVOC storage tank 4 can be vaporised and sent via a pipeline 20, to be heated or vaporised in a LVOC heater 9, followed by a pressure let-down 10, in order to provide further blanket gas for the oil storage tank 25.

Any further deficit of blanket gas in or expected in the oil storage tank 25 can be provided by the introduction of an amount of inert gas 11 (optionally from a nitrogen generator, possibly from a combustion-type inert gas generator), which can be introduced into the latter part of pipeline 20 (or into the latter part of the decompressed VOC pipeline) to provide the balance.

By introducing the light hydrocarbon components provided by the compressed VOC first in the oil storage tank 25, followed only later by any required supply of LVOC, the composition of gas in the vapour space of the oil storage tank 25 is maintained at its lightest hydrocarbon definition possible, thereby minimising or preventing reabsorption of the blanket gas into the crude oil. In recovering the light components as compressed VOC, and in the sequencing as proposed above (compressed VOC followed by LVOC), VOC generation in the tank is reduced, subsequent vapour recovery is easier, inert gas usage is minimised, and venting of vapour from the crude oil tank is prevented.

The present invention uses compressed VOC as a source of blanket gas, with a further source of blanket gas from LVOC. Both the compressed VOC and LVOC can be sourced from recovered VOC from the same oil storage tank or tanks requiring the blanket gas, optionally stored in suitable storage tanks, in-between loading and unloading of the oil storage tank(s) with oil or oil product.

The present invention is designed to achieve little or no generation of VOC or (re)-absorption of VOC from the blanket gas into the oil during its unloading from the oil storage tank(s). For example, the present invention is able to achieve the steps of:
- filling one or more oil storage tanks with a nominal value such as 120,000 m³ of crude oil,
- thereby displacing 120,000 m³ of vapour from the oil storage tank(s);
- entirely capturing such vapour as compressed VOC and optionally some LVOC, and then later
- discharging the 120,000 m³ of oil, and
- wholly or substantially replacing that volume with the same 120,000 m³ of vapour sourced from the compressed VOC and optional LVOC that were created.

The present invention is also able to prevent or substantially reduce reabsorption of captured VOC into stored oil. This means less (and possibly no) addition of any extra inert gas during the oil discharge, and the next oil loading into the oil storage tank starting with a tank atmosphere that is very high in hydrocarbon content, thereby preventing formation of additional VOC during the next oil loading.

## Claims

1. A method of providing blanket gas for use in one or more oil storage tanks (25) comprising at least the steps of;
(a) recovering VOC from the one or more oil storage tanks as a recovered VOC stream;
(b) compressing the recovered VOC stream to provide a compressed recovered VOC stream;
(c) separating the compressed recovered VOC stream to provide at least a liquefied volatile organic compounds (LVOC) stream and an uncondensed VOC stream;
(d) compressing the uncondensed VOC stream to provide a compressed VOC stream;
(e) heating at least a portion of the compressed VOC stream to provide a warmer compressed VOC stream;
(f) reducing the pressure of the warmer compressed VOC stream to provide a decompressed VOC stream; and
(g) providing the decompressed VOC stream as blanket gas to one or more oil storage tanks; and
(h) vapourising a portion of the liquefied volatile organic compounds (LVOC) stream to provide blanket gas for use in one or more oil storage tanks.

2. A method as claimed in claim 1 wherein the method further comprises the step of recovering the VOC from the same one or more oil storage tanks (25) subsequently provided with the decompressed VOC.

3. A method as claimed in any one of claims 1-2 wherein the method comprises compressing the recovered VOC stream to provide at least a LVOC stream and a uncondensed VOC stream at pressure above 5 barg.

4. A method as claimed in claim 1 wherein the recovery of VOC from the one or more oil storage tanks (25) occurs when the oil storage tank is being loaded with oil, and the providing of the decompressed VOC stream as a blanket gas occurs when the oil storage tank is being emptied of the oil.

5. A method as claimed in claim 1 wherein the method further comprises the steps of heating at least a portion of the LVOC stream to provide a warmer LVOC stream, reducing the pressure of the warmer LVOC stream to provide a decompressed VOC stream, and providing the decompressed VOC stream as additional blanket gas to one or more oil storage tanks.

6. Apparatus for recovering and using volatile organic compounds (VOC) from one or more oil storage tanks (25) comprising at least;
(a) one or more pipelines (19) able to recover VOC from the one or more oil storage tanks as a recovered VOC stream;
(b) one or more first compressors (1) able to compress the recovered VOC stream to provide a compressed recovered VOC stream;
(c) one or more separators (3) able to separate the compressed recovered VOC stream to provide at least a liquefied volatile organic compounds (LVOC) stream and an uncondensed VOC stream;
(d) one or more second compressors (5) able to compress the uncondensed VOC stream to provide a compressed VOC stream;
(e) one or more heaters (7) able to heat at least a portion of the compressed VOC stream to provide a warmer compressed VOC stream;
(f) one or more reducers (8) able to reduce the pressure of the warmer compressed VOC stream to provide a decompressed VOC stream; and
(g) one or more pipelines able to provide the decompressed VOC stream as blanket gas to one or more oil storage tanks;
and further comprising:
- one or more storage tanks (6) able to store the compressed VOC stream prior to step (e);
- one or more storage tanks (4) able to store the LVOC stream; and.
- one or more heaters (9) able to heat at least a portion of the LVOC stream to provide a warmer LVOC stream, and one or more reducers (10) able to reduce the pressure of the warmer LVOC to provide a decompressed VOC stream, and one or more pipelines able to provide the decompressed VOC stream as additional blanket gas to the one or more oil storage tanks.

7. Apparatus as claimed in claim 6 arranged on a sea vessel, on an oil platform, on a floating storage and offloading (FSO) unit, or on floating production storage and offloading (FPSO) unit.

## Patentansprüche

1. Ein Verfahren zum Bereitstellen von Schutzgas zur Verwendung in einem oder mehreren Öllagertanks (25), beinhaltend mindestens die folgenden Schritte:
(a) Rückgewinnen von VOC aus dem einem oder den mehreren Öllagertanks als zurückgewonnener VOC-Strom;
(b) Komprimieren des zurückgewonnenen VOC-Stroms, um einen komprimierten zurückgewonnenen VOC-Strom bereitzustellen;
(c) Trennen des komprimierten zurückgewonnenen VOC-Stroms, um mindestens einen Strom aus verflüssigten flüchtigen organischen Verbindungen (LVOC) und einen nicht kondensierten VOC-Strom bereitzustellen;
(d) Komprimieren des nicht kondensierten VOC-Stroms, um einen komprimierten VOC-Strom bereitzustellen;
(e) Erhitzen mindestens eines Teils des komprimierten VOC-Stroms, um einen wärmeren komprimierten VOC-Strom bereitzustellen;
(f) Reduzieren des Drucks des wärmeren komprimierten VOC-Stroms, um einen dekomprimierten VOC-Strom bereitzustellen; und
(g) Bereitstellen des dekomprimierten VOC-Stroms als Schutzgas für einen oder mehrere Öllagertanks; und
(h) Verdampfen eines Teils des Stroms aus verflüssigten flüchtigen organischen Verbindungen (LVOC), um Schutzgas zur Verwendung in einem oder mehreren Öllagertanks bereitzustellen.

2. Verfahren gemäß Anspruch 1, wobei das Verfahren ferner den Schritt des Rückgewinnens der VOC aus demselben einen oder denselben mehreren Öllagertanks (25), denen anschließend die dekomprimierten VOC bereitgestellt werden, beinhaltet.

3. Verfahren gemäß einem der Ansprüche 1-2, wobei das Verfahren das Komprimieren des zurückgewonnenen VOC-Stroms beinhaltet, um mindestens einen LVOC-Strom und einen nicht kondensierten VOC-Strom bei einem Druck über 5 barg bereitzustellen.

4. Verfahren gemäß Anspruch 1, wobei die Rückgewinnung von VOC aus dem einen oder den mehreren Öllagertanks (25) erfolgt, wenn der Öllagertank mit Öl beladen wird, und das Bereitstellen des dekomprimierten VOC-Stroms als Schutzgas erfolgt, wenn das Öl aus dem Öllagertank entleert wird.

5. Verfahren gemäß Anspruch 1, wobei das Verfahren ferner die Schritte des Erhitzens mindestens eines Teils des LVOC-Stroms, um einen wärmeren LVOC-Strom bereitzustellen, des Reduzierens des Drucks des wärmeren LVOC-Stroms, um einen dekomprimierten VOC-Strom bereitzustellen, und des Bereitstellens des dekomprimierten VOC-Stroms als zusätzliches Schutzgas für einen oder mehrere Öllagertanks beinhaltet.

6. Eine Vorrichtung zum Rückgewinnen und Verwenden flüchtiger organischer Verbindungen (VOC) aus einem oder mehreren Öllagertanks (25), die mindestens Folgendes beinhaltet:
(a) eine oder mehrere Rohrleitungen (19), die in der Lage sind, VOC aus dem einem oder den mehreren Öllagertanks als zurückgewonnenen VOC-Strom zurückzugewinnen;
(b) einen oder mehrere erste Kompressoren (1), die in der Lage sind, den zurückgewonnenen VOC-Strom zu komprimieren, um einen komprimierten zurückgewonnenen VOC-Strom bereitzustellen;
(c) eine oder mehrere Trenneinrichtungen (3), die in der Lage sind, den komprimierten zurückgewonnenen VOC-Strom zu trennen, um mindestens einen Strom aus verflüssigten flüchtigen organischen Verbindungen (LVOC) und einen nicht kondensierten VOC-Strom bereitzustellen;
(d) einen oder mehrere zweite Kompressoren (5), die in der Lage sind, den nicht kondensierten VOC-Strom zu komprimieren, um einen komprimierten VOC-Strom bereitzustellen;
(e) eine oder mehrere Heizeinrichtungen (7), die in der Lage sind, mindestens einen Teil des komprimierten VOC-Stroms zu erhitzen, um einen wärmeren komprimierten VOC-Strom bereitzustellen;
(f) eine oder mehrere Reduziereinrichtungen (8), die in der Lage sind, den Druck des wärmeren komprimierten VOC-Stroms zu reduzieren, um einen dekomprimierten VOC-Strom bereitzustellen; und
(g) eine oder mehrere Rohrleitungen, die in der Lage sind, den dekomprimierten VOC-Strom als Schutzgas für einen oder mehrere Öllagertanks bereitzustellen;
und die ferner Folgendes beinhaltet:
- einen oder mehrere Lagertanks (6), die in der Lage sind, den komprimierten VOC-Strom vor Schritt (e) zu lagern;
- einen oder mehrere Lagertanks (4), die in der Lage sind, den LVOC-Strom zu lagern; und
- eine oder mehrere Heizeinrichtungen (9), die in der Lage sind, mindestens einen Teil des LVOC-Stroms zu erhitzen, um einen wärmeren LVOC-Strom bereitzustellen, und eine oder mehrere Reduziereinrichtungen (10), die in der Lage sind, den Druck der wärmeren LVOC zu reduzieren, um einen dekomprimierten VOC-Strom bereitzustellen, und eine oder mehrere Rohrleitungen, die in der Lage sind, den dekomprimierten VOC-Strom als zusätzliches Schutzgas für den einen oder die mehreren Öllagertanks bereitzustellen.

7. Vorrichtung gemäß Anspruch 6, die auf einem Seeschiff, auf einer Ölplattform, auf einer schwimmenden Lager- und Entladeeinheit (FSO, Floating Storage and Offloading Unit) oder auf einer schwimmenden Förder-, Lager- und Entladeeinheit (FPSO, Floating Production Storage and Offloading Unit) angeordnet ist.

## Revendications

1. Un procédé d'obtention de gaz de couverture destiné à être utilisé dans un ou plusieurs réservoirs de stockage d'huile (25) comprenant au moins les étapes de :
(a) récupération de COV dans ces un ou plusieurs réservoirs de stockage d'huile sous la forme d'un courant de COV récupérés ;
(b) compression du courant de COV récupérés afin d'obtenir un courant de COV récupérés comprimé ;
(c) séparation du courant de COV récupérés comprimé afin d'obtenir au moins un courant de composés organiques volatils liquéfiés (COVL) et un courant de COV non condensés ;
(d) compression du courant de COV non condensés afin d'obtenir un courant de COV comprimé ;
(e) chauffage d'au moins une partie du courant de COV comprimé afin d'obtenir un courant de COV comprimé plus chaud ;
(f) réduction de la pression du courant de COV comprimé plus chaud afin d'obtenir un courant de COV décomprimé ; et
(g) apport du courant de COV décomprimé en tant que gaz de couverture jusqu'à un ou plusieurs réservoirs de stockage d'huile ; et
(h) vaporisation d'une partie du courant de composés organiques volatils liquéfiés (COVL) afin d'obtenir un gaz de couverture destiné à être utilisé dans un ou plusieurs réservoirs de stockage d'huile.

2. Un procédé tel que revendiqué dans la revendication 1, le procédé comprenant en outre l'étape de récupération des COV dans ces mêmes un ou plusieurs réservoirs de stockage d'huile (25) dans lesquels sont apportés par la suite les COV décomprimés.

3. Un procédé tel que revendiqué dans l'une quelconque des revendications 1 à 2, le procédé comprenant la compression du courant de COV récupérés afin d'obtenir au moins un courant de COVL et un courant de COV non condensés à une pression au-dessus de 5 barg.

4. Un procédé tel que revendiqué dans la revendication 1 dans lequel la récupération de COV dans ces un ou plusieurs réservoirs de stockage d'huile (25) a lieu lorsque le réservoir de stockage d'huile est en train d'être rempli d'huile, et l'apport du courant de COV décomprimé en tant que gaz de couverture a lieu lorsque le réservoir de stockage d'huile est en train d'être vidé de son huile.

5. Un procédé tel que revendiqué dans la revendication 1, le procédé comprenant en outre les étapes de chauffage d'au moins une partie du courant de COVL afin d'obtenir un courant de COVL plus chaud, de réduction de la pression du courant de COVL plus chaud afin d'obtenir un courant de COV décomprimé, et d'apport du courant de COV décomprimé en tant que gaz de couverture additionnel jusqu'à un ou plusieurs réservoirs de stockage d'huile.

6. Appareil pour la récupération et l'utilisation de composés organiques volatils (COV) dans un ou plusieurs réservoirs de stockage d'huile (25) comprenant au moins :
(a) un ou plusieurs pipelines (19) à même de récupérer des COV dans ces un ou plusieurs réservoirs de stockage d'huile sous la forme d'un courant de COV récupérés ;
(b) un ou plusieurs premiers compresseurs (1) à même de comprimer le courant de COV récupérés afin d'obtenir un courant de COV récupérés comprimé ;
(c) un ou plusieurs séparateurs (3) à même de séparer le courant de COV récupérés comprimé afin d'obtenir au moins un courant de composés organiques volatils liquéfiés (COVL) et un courant de COV non condensés ;
(d) un ou plusieurs deuxièmes compresseurs (5) à même de comprimer le courant de COV non condensés afin d'obtenir un courant de COV comprimé ;
(e) un ou plusieurs éléments de chauffage (7) à même de chauffer au moins une partie du courant de COV comprimé afin d'obtenir un courant de COV comprimé plus chaud ;
(f) un ou plusieurs réducteurs (8) à même de réduire la pression du courant de COV comprimé plus chaud afin d'obtenir un courant de COV décomprimé ; et
(g) un ou plusieurs pipelines à même d'apporter le courant de COV décomprimé en tant que gaz de couverture jusqu'à un ou plusieurs réservoirs de stockage d'huile ;
et comprenant en outre :
- un ou plusieurs réservoirs de stockage (6) à même de stocker le courant de COV comprimé préalablement à l'étape (e) ;
- un ou plusieurs réservoirs de stockage (4) à même de stocker le courant de COVL ; et
- un ou plusieurs éléments de chauffage (9) à même de chauffer au moins une partie du courant de COVL afin d'obtenir un courant de COVL plus chaud, et un ou plusieurs réducteurs (10) à même de réduire la pression du COVL plus chaud afin d'obtenir un courant de COV décomprimé, et un ou plusieurs pipelines à même d'apporter le courant de COV décomprimé en tant que gaz de couverture additionnel jusqu'à ces un ou plusieurs réservoirs de stockage d'huile.

7. Appareil tel que revendiqué dans la revendication 6 disposé sur un bâtiment marin, sur une plate-forme de forage pétrolier, sur une unité flottante de stockage et de déchargement (FSO), ou sur une unité flottante de production, de stockage et de déchargement (FPSO).
